Europäisches Patentamt

European Patent Office

Office européen des brevets

(19)

(11) Publication number: **0 105 434**
**A2**

(12) # EUROPEAN PATENT APPLICATION

(21) Application number: **83109541.9**

(22) Date of filing: **24.09.83**

(51) Int. Cl.³: **G 01 N 27/30**

(30) Priority: **27.09.82 US 425051**
**30.09.82 US 430857**

(43) Date of publication of application:
**18.04.84 Bulletin 84/16**

(84) Designated Contracting States:
**BE DE FR GB IT LU NL**

(71) Applicant: **E.I. DU PONT DE NEMOURS AND COMPANY**
**Legal Department 1007 Market Street**
**Wilmington Delaware 19898(US)**

(72) Inventor: **Long, George Robinson**
**18 Deer Run**
**Little Baltimore Newark Delaware 19711(US)**

(74) Representative: **von Kreisler, Alek, Dipl.-Chem. et al,**
**Deichmannhaus am Hauptbahnhof**
**D-5000 Köln 1(DE)**

(54) Potentiometric analysis instrument.

(57) A reference electrode system is characterized by a member with a flow passage therein disposed to permit fluid flow between an electrolyte reservoir and a sample channel. The passage in the member is configured to provide a predetermined flow rate that is reproducible from instrument to instrument.

_Fig.1._

EP 0 105 434 A2

## TITLE

A REFERENCE ELECTRODE SYSTEM FOR A
POTENTIOMETRIC ANALYSIS INSTRUMENT

## BACKGROUND OF THE INVENTION

This invention relates to a potentiometric analysis instrument and, in particular, to a reference electrode system for producing a liquid junction in a potentiometric analysis instrument.

A potentiometric analysis instrument is a device which utilizes a change in electrical potential of a sensing electrode element with respect to a reference electrode element to provide an indication of the concentration of a predetermined type of charge carriers (ions) within a sample fluid. For example, in a potentiometric analysis instrument of the ion-selective electrode type, a sample liquid is caused to flow past an ion-sensitive membrane which serves as the boundary between the sample liquid and an electrolyte reservoir of constant solution composition in which the sensing electrode element is immersed. Although physical contact between the sample liquid and the electrolyte in the reservoir is prevented by the membrane the membrane is chemically responsive to the presence of a selected ion in the sample. The interaction between the membrane and the selected ion in the sample affects the concentration of charge carriers in the electrolyte, thereby altering the potential difference between the sensing electrode element and the reference electrode element. The magnitude of the potential difference provides an indication of the concentration of the selected ion in the sample.

The reference electrode element against which the potential difference is measured is itself immersed in an electrolyte disposed in a reference

395-A

electrolyte reservoir formed in a housing.  Since it is not desirable to place the reference electrode element in the sample stream itself, some mechanism must be provided to electrically connect the reference electrode element to the sample liquid to complete the measuring circuit.  The sample flows through a channel formed in the housing.  In ion-selective electrode potentiometric analysis instruments this electrical connection is effected by permitting the reservoir electrolyte to physically contact the sample liquid in the channel at an interface known as a "liquid junction".  The electrolyte from the reference reservoir communicates with the sample liquid in the channel through a passage formed in the housing.  This interface of two dissimilar solutions at the liquid junction produces an additional potential difference in the measuring circuit.

It is important that the electrical potential at the liquid junction with respect to the reference electrode element be maintained relatively constant so that an accurate measurement of the difference between the sensing electrode element and the reference electrode element may be maintained. To effect this purpose it is believed desirable to provide a flowing system wherein electrolyte flows through the passage into the channel.  However, in a flowing system it is important that the flow rate be sufficient to prevent particulate matter from accumulating in the passage and to provide a fresh liquid junction with each potential measurement. Failure to meet either or both of these requirements may result in unwanted potential fluctuations at the reference electrode element.  In addition, the flow rate must not be so great as to poison the membrane

3

upstream of the liquid junction. Moreover, it is desirable that the same flow rate be reproducibly obtained so that the liquid junction potential variation is kept to a minimum and is the same from instrument to instrument.

Known potentiometric analysis instruments form the passage through which electrolyte from the reference electrode reservoir communicates with the sample in a variety of ways, none of which is believed entirely satisfactory because of the resultant variations in the liquid junction flow rate that occurs from instrument to instrument. In addition, some of the passages are formed in such a manner that the probability of reduced electrolyte flow due to buildup of particulate matter is increased.

For example, in one potentiometric analysis instrument of the ion-selective type the channel through which the sample flows is defined within a length of plastic conduit. The passage that defines the flow path for the reference electrode reservoir electrolyte is provided by drilling through the plastic conduit in a direction perpendicular to the axis thereof. Such a technique results in a passage having a rough surface, thus causing variations in the passage's diameter and hence its flow rate from instrument to instrument. Another analysis instrument of the ion-selective type utilizes spark discharge in order to form the electrolyte flow passage in the plastic conduit. This technique similarly results in a very rough internal passage extending through the conduit, with subsequent unacceptable variations in the flow rate from instrument to instrument. In addition the ends of each passage in the vicinity of the liquid junction provide crevices in which organic matter may be trapped, thus making the instrument susceptible to passage blockage and increasing the probability of flow rate variations from instrument to instrument.

In another known analysis instrument glass tubing is utilized to form the sample flow channel and the electrolyte flow passage is bored through the glass tubing using a laser drill. This technique results in the production of a conical bore which is difficult to reproduce and control. Also, the bore is usually not round in the vicinity of the liquid junction causing problems with reproducibility. It also produces rough edges and surfaces increasing the suceptibility to passage blockage.

Still another alternative is to form the passage by stacking a predetermined number of sapphire watch jewels one atop the other. Such watch jewels have a very precise bore that extends through a portion of the jewel. In order to form a member of the requisite length to provide the desired flow rate it is necessary to stack a plurality of jewels atop each other. Thus, flow-tight seals are necessitated around the outer diameter of the stacked jewels. Forming such seals is difficult.

Accordingly, it is believed advantageous to provide a reference electrode system for producing a liquid junction in a potentiometric analysis instrument having a member with a flow passage therein disposed between the electrolyte reservoir and the sample channel, the member having a smooth bore that is precisely defined and exhibits a constant cross-section throughout its length so that the flow through the member is precise and reproducible from instrument to instrument.

## SUMMARY OF THE INVENTION

The present invention relates to a reference electrode system for producing a liquid junction in a potentiometric analysis instrument. A reference electrode housing defines an electrolyte reservoir therein. A sample channel extends through the housing. A member having a flow passage therein is disposed to permit fluid communication between the reservoir and the channel. The passage through the member is configured to provide a predetermined fluid flow between the reservoir and the channel that is precisely reproducible from instrument to instrument. In the preferred embodiment the member is formed of a glass capillary tube having a smooth bore of a predetermined constant diameter d and a length L.

## BRIEF DESCRIPTION OF THE DRAWINGS

The invention will be more fully understood from the following detailed description thereof taken in connection with the accompanying drawings which form a part of this application and in which:

Figure 1 is a schematic representation of a potentiometric analysis instrument having a reference electrode system in accordance with the present invention;

Figure 2 is an enlarged sectional view of the portion of Figure 1 indicated by the dotted circle illustrating the preferred embodiment of a member defining a flow passage for a reference electrolyte in accordance with the present invention;

Figures 3A through 3D are schematic views of the process for forming the member shown in Figure 2; and

Figures 4A and 4B are plan views of alternate embodiments of a member useful in a reference electrode system in accordance with the presence invention.

## DETAILED DESCRIPTION OF THE INVENTION

Throughout the following detailed description similar reference numerals refer to similar elements in all figures of the drawings.

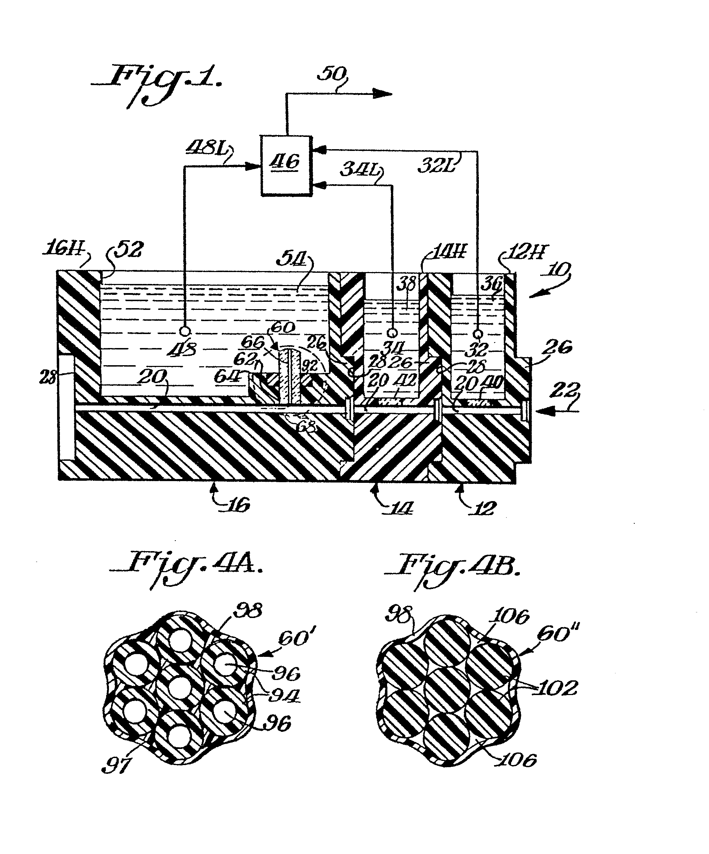

With reference to Figure 1 shown is a stylized pictorial representation of a potentiometric analysis instrument of the ion-selective type generally indicated by reference character 10. The instrument 10 includes three compartmentalized sensing electrodes systems 12 and 14 and a reference electrode system 16 embodying the teachings of the present invention. Each of the electrode systems includes a housing 12H, 14H, and 16H that is molded or otherwise suitably formed from an inert material such as polycarbonate plastic. The electrode housings are each provided with through channels 20 which, when registered, cooperate to define a smooth wall sample channel through which flows a sample, such as a patient's body liquid, in the direction of a flow arrow 22. Each electrode housing includes a projection 26 and a correspondingly shaped recess 28 on opposite sides thereof to faciliate engagement of the electrode housing and registration of the channels 20 therethrough. Suitable seals (not shown) may be provided to provide substantially leak-tight interconnection of the electrode housings. Suitable covers for each of the housings may be provided, if desired.

The sensing electrode systems 12 and 14 each include a sensing electrode element 32 and 34, respectively disposed in a reservoir defined within the respective housings 12H and 14H. Each reservoir is filled with an electrolyte 36 and 38, respectively. The electrolytes in the sensing electrode housings are physically isolated from the sample stream passing in the channel 20. However, the electrode housings are provided with membranes 40 and 42 which are sensitive to selected ions in the sample, such as potassium and sodium, respectively. The chemical interaction between the membrane and the sample results in a change in electrical potential on the particular electrode elements 32 and 34. The potentials on the electrode elements 32 and 34 are carried over associated lines 32L and 34L to a comparison network 46. These changes in potential on the sensing electrode elements, measured with respect to a reference potential established on a reference electrode element 48 applied over a line 48L to the comparison network 46, provide an indication on an output line 50 of the concentration of each particular ion in the sample.

The reference electrode housing 16H forms on the interior thereof a reservoir 52 adapted to receive an electrolyte solution 54 such as potassium chloride. Immersed beneath the level of the electrolyte solution 54 is the reference electrode element 48.

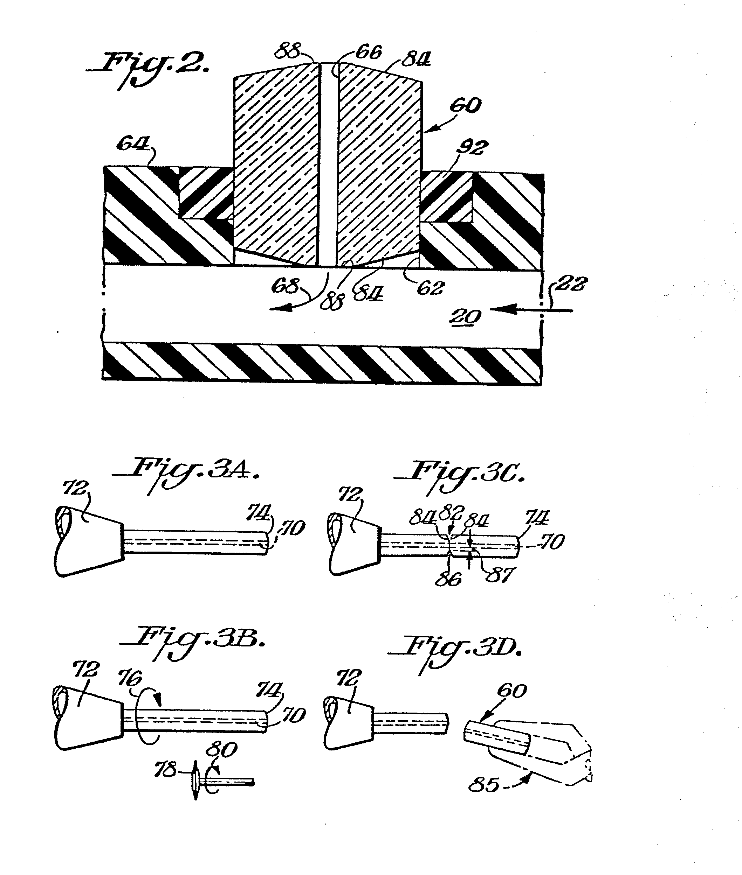

In accordance with this invention the electrical connection between the reference electrode element 48 and the sample in the channel 20 extending through the housing 16H is completed by virtue of a fluid communication defined between the electrolyte solution 54 and the sample afforded through a flow member 60. The member 60 is supported in a recess 62 (believed best seen in Figure 2) provided in an abutment 64 formed on the interior of the housing 16H. Electrolyte from the reservoir 52 is drawn into the channel 20 through a passage 66 defined through the member 60 by sample flow in a venturi effect, the electrolyte flow being defined by the reference arrows 68. The region at the interface between the electrolyte effluent from the mouth of the passage 66 and the sample in the channel 20 is known as the "liquid junction".

The flow of the electrolyte into the sample serves to flush the liquid junction and prevent its blockage by organic or particulate matter. This, in turn, assists in maintaining the potential on the reference electrode element 48 at the predetermined reference level (measured with respect to the sample in the channel 20). It is also desirable to precisely reproduce the flow rate of the electrolyte from instrument to instrument so that variations in reference potentials are avoided. This is accomplished by the present invention through the use of the member 60 having the precisely reproducible flow passage therein.

As is well known the flow rate of a liquid such as the electrolyte 54 is governed by a flow coefficient K which is functionally related to various physical parameters of the member 60 through which the passage 66 is defined. More precisely the flow coefficient K for a given pressure drop and a fixed viscosity may be mathematically defined as:

$$K \; \alpha \; \frac{d^4}{L} \qquad (1)$$

where, d is the diameter of the passage 66 and L is the length thereof.

As an example, if it is assumed that a flow rate on the order of $2 \times 10^{-10}$ cubic inches per second through the passage 66 is necessary to effect the purposes above stated the member 60 would have to exhibit a passage 66 having a diameter d on the order of 0.002 inches and a length L on the order of 0.090 inches.

It may be appreciated from Equation (1) that the critical dimension in accurately maintaining the desired flow rate coefficient is the diameter d of the passage 66. The uniformity of the diameter d of the passage 66 throughout its length L is an important factor in insuring that the desired flow 68 of electrolyte into the sample channel 20 occurs.

In the preferred embodiment of the invention the member 60 is defined by a length of glass tubing. Although glass capillary tubing is available which provides a bore that exhibits a smooth precisely round uniform diameter throughout its length, it is difficult to accurately cut such tubing to the dimension L required for the application herein discussed and to keep the bore free of foreign material. Accordingly, it has been necessary to use the alternative techniques such as disclosed above to generate the passage 66.

In accordance with this invention a capillary tube having a uniform smooth bore extending therethrough with a round diameter d throughout its length may be accurately severed into predetermined segments of length L so that a member 60 having a passage 66 therein with a predetermined flow rate coefficient K may be precisely and reproducibly formed.

The method used to form the member 60 used in the reference electrode system in accordance with the present invention is diagrammatically illustrated with reference to Figures 3A through 3D.

In Figure 3A a piece of precision thick wall capillary lead glass tubing such as that manufactured and sold by Accu-Glass, a division of Becton-Dickinson, Inc., of St. Louis, Missouri, having a bore 70 extending therethrough with a dimension d is mounted into the chuck 72 of a conventional lathe. The free end 74 of the piece of the thick wall capillary tubing has previously been prepared in a manner to be discussed so as to eventually serve as one terminus of the member 60.

With reference to Figure 3B, the thick wall tubing is rotated at approximately thirty revolutions per minute in a first angular direction 76 and a cutting instrument, such as a shaped diamond saw 78 of three hundred twenty grit and 0.015 to 0.017 inches thickness, rotating at approximately four thousand revolutions per minute in a counterdirection 80 is brought into contact with the piece of thick wall tubing. The piece of thick wall tubing and the saw 78 are relatively moved once completely about the periphery of the tubing to form a groove 82 (Figure 3C) thereinto. The groove 82 is defined by confronting faces 84 with the base 86 of the groove 82 lying within a predetermined close distance 87 of the bore 70. The groove 82 is formed a predetermined distance L from the free end 74 of the piece of thick wall capillary tubing. It should be noted that the cutting edge of the saw 78 is contoured to provide a beveled configuration to the groove 82 although other configurations of the groove (e.g., parallel to the axis of the bore in the piece of thick wall capillary tubing may be provided.

With the groove 82 so formed, the piece of tubing is grasped by a suitable implement 85, such as a pin vice or collet (Figure 3D) at a point intermediate to its free end 74 and the groove 82 and broken from the remaining portion thereof held in the chuck 72. It is to be appreciated that any suitable mechanism may be utilized to break the tubing at the groove 82 so as to define the member 60.

As a result of the above-described process a member 60 such as that shown in Figure 2 is produced. If a beveled-cut saw is used the tubing will break so that a generally smooth, flat land 88 is formed about the mouth of the passage 66 (i.e., the bore 70 of the thick wall capillary tubing). It is noted that if the saw cut provides a groove the base of which is parallel to the bore axis, then in all likelihood, the tubing will not sever exactly in the plane of the groove face 84 (which will lie perpendicular to the bore axis). Accordingly, in such an instance the breaking of the tubing results in the production of upstanding shoulders which project a slight distance above the face of the groove. The land formed on the face of the shoulder is generally radial with respect to the axis of the member 60 due to the close proximity of the base 86 of the groove to the bore 70 of the tubing used to form the member. It is to be noted that the height of the shoulder produced at each end of the member 60 produces a passage 66 that lies within a predetermined close distance of the predetermined length L so that the flow characteristics of the member are not materially affected. In any event, however formed, the surface of the land 88 is smooth and free of ruts caused by sawing. In addition, the fact that the tubing is broken and not sawed eliminates the risk that particles will enter the passage 66.

The member 60 so formed is mounted into the recess 62 provided in the abutment 64. A rod or other backstop (not shown) which closely matches the inside diameter of the channel 20 is introduced thereinto. With the backstop in place the member 60 is introduced into the recess 62 such that the land 88 on one terminus of the member 60 abuts against the backstop. In this way flow disruptions in the vicinity of the liquid junction are minimized. With the member 60 so positioned an epoxy cement or other suitable securing agent 92 is introduced into the annulus defined between the outside of the member 60 and the abutment 64 thereby securing the member 60.

Alternate embodiments of the member 60 are shown in Figures 4A and 4B. In Figure 4A the member 60' is formed from a bundle of hollow fibers 94 each having a bore 96 therethrough. The fibers 94 are mounted in a suitable mounting material 97, as wax, and are encased in a shrink tube 98. In this instance the effective dimension of the member 60' is the sum of the individual bores 96. In Figure 4B, the member 60" is defined by a bundle of solid fibers 102 encased in a shrink fit tube 98. The passage is defined by the open spaces 106 defined between adjacent fibers and/or shrink tube 98. Thus, in this embodiment the effective dimension of the member 60" is the sum of the spaces 106.

Those skilled in the art, having the benefit of the teachings as hereinabove set forth, may effect various modifications thereto. For example, other expedients may be used to define the member 60 and/or the passage formed therein. However, those and any other modifications are to be construed as lying within the scope of the present invention as defined in the appended claims.

WHAT IS CLAIMED IS:

1. A reference electrode system for a potentiometric analysis instrument comprising:

a housing having a reservoir defined therein, the reservoir being adapted to receive an electrolyte therein, the housing having a smooth wall channel adapted to carry a sample liquid therethrough;

a reference electrode element disposed within the housing; and

a member having a passage formed therein disposed within the housing and arranged to permit fluid communication through the passage between the reservoir and the channel, the passage being dimensioned to permit a fluid flow at a predetermined rate therethrough.

2. The reference electrode system of claim 1 wherein the member comprises a capillary tube wherein the passage is defined by a uniform smooth bore with a predetermined diameter d extending through the tube for a length L.

3. The reference electrode system of claim 2 wherein the capillary tube is glass.

4. The reference electrode system of claims 1, 2 or 3 wherein the member has a smooth land formed about the mouth of the passage at each end thereof.

5. The reference electrode system of claim 1 wherein the member comprises a bundle of hollow fibers encased in a tube, each fiber having a bore therethrough and wherein the passage is defined by the bores through the fibers.

6. The reference electrode system of claim 1 wherein the member comprises a bundle of fibers encased in a tube and wherein the passage is defined by open spaces between adjacent fibers and between a fiber and the tube.

7. In a housing for a reference electrode of the type having an electrolyte reservoir defined therein and a sample flow channel extending therethrough, the improvement which comprises

a member having a passage formed therein disposed within the housing and arranged to permit fluid communication through the passage between the reservoir and the channel, the passage being dimensioned to permit a fluid flow at a predetermined rate therethrough.

8. The housing of claim 7 wherein the member comprises a capillary tube wherein the passage is defined by a uniform smooth bore with a predetermined diameter d extending through the tube for a length L.

9. The housing of claim 8 wherein the capillary tubing is lead glass.

10. The housing of claims 7, 8 or 9 wherein the member has a smooth land formed about the mouth of the passage at each end thereof.

11. The housing of claim 7 wherein the member comprises a bundle of hollow fibers encased in a tube, each fiber having a bore therethrough and wherein the passage is defined by the bores through the fibers.

12. The reference electrode system of claim 7 wherein the member comprises a bundle of fibers encased in a tube and wherein the passage is defined by open spaces between adjacent fibers and between a fiber and the tube.

0105434

1/2

Fig.1.

Fig.4A.

Fig.4B.

2/2

**Fig.2.**

88  66  84

60

64  92

68  88  84  62  22

20

**Fig.3A.**

72  74  70

**Fig.3C.**

72  84 82 84  74  70

86  87

**Fig.3B.**

72  76  74  70

78  80

**Fig.3D.**

72  60

85